# EUROPEAN PATENT APPLICATION

(11) **EP 1 492 365 A2**
(43) Date of publication of application: **29.12.2004**
(21) Application number: 04014701.9
(22) Date of filing: 23.06.2004
(51) Int. Cl.: H04Q 7/32

(54) **Method for setting time in GSM mode mobile communication terminal**

(30) Priority: 24.06.2003 KR 2003041088
(71) Applicant: MSOLTEK Co. Ltd., 135-856 Seoul (KR)
(72) Inventor: Lee, Nam Yong, Hyundai Hometown, Anyang-si, Gyeonggi-do (KR)
(74) Representative: Ekström, Nils

(57) **Abstract**

If the current time is not set, an updating command of the current time is inputted or a predetermined time period has elapsed after the current time was set in a mobile communication terminal of a GSM scheme, the current time is simply set or updated. At an early stage that a mobile communication terminal of a GSM scheme is turned on, a control unit determines whether to set or update the current time depending on whether the current time is not set, an updating command of the current time is inputted or a predetermined time period has elapsed after the current time was set, generates a current time request data if the current time needs to be set or updated, transmits the generated current time request data to a current time-providing server, waits for reception of a current time data from the current time-providing server according to the transmitted current time request data, calculates a correction time by dividing the time taken for receiving the current time data after the current time request data has been transmitted by 2, adds the calculated correction time to the received current time data to correct the current time, sets the corrected current time, and then display it as the current time.

## Description

### BACKGROUND OF THE INVENTION

### Field of the Invention

The present invention relates to a mobile communication terminal of a Global System for Mobile communications (GSM) scheme, and more particularly, to a method for automatically correctly setting the current time in the mobile communication terminal of the GSM scheme.

### Background of the Related Art

A GSM system refers to a digital communication system of a Time Division Multiple Access (TDMA) scheme, which has been usually commercialized in European countries. The GSM system is adapted to support Integrated Services Digital Network (ISDN), packet exchange network, asynchronous and synchronous data communications associated with the Internet, G3 fax communication and so on as well as voice communication. In the GSM system, a smart card is necessarily used as a Subscriber Identification Module (SIM) card to identify a subscriber terminal.

In such a GSM system, however, a base station does not provide information on the current time. Thus a user who uses a mobile communication terminal of the GSM scheme suffers from inconvenience and cumbersomeness of setting the current time by manipulating the menu through a predetermined procedure manually.

Furthermore, although the user sets the current time, the set current time is initialized if the power supply of the battery that powers the mobile communication terminal is fully discharged. For this reason, the mobile communication terminal of the GSM scheme has an additional battery for backup built therein so that the current time can be continuously counted by means of the power of the battery for backup although the power of the battery is fully discharged. Even in this case, if a long time has elapsed with the power of the battery discharged, the power of the battery for backup is fully discharged and the current time is thus initialized. Accordingly, the user has to reset the current time manually.

Moreover, in the mobile communication terminal of the GSM scheme, the current time is displayed while it is continuously counted from the set current time. If a long time has elapsed, lots of error occurs in the current time displayed. Thus there is a problem that the current time has to be updated.

### SUMMARY OF THE INVENTION

Accordingly, the present invention has been made in view of the above problems, and it is an object of the present invention to provide a method for setting the time in a mobile communication terminal of a GSM scheme wherein a request for the current time is automatically made to a current time-providing server if the current time is not set in the mobile communication terminal, and the current time of the mobile communication terminal is set based on current time data provided by the current time-providing server.

Another object of the present invention is to provide a method for setting the time in a mobile communication terminal of a GSM scheme wherein if a user instructs updating of the current time or a predetermined time period has elapsed after the current time is set, a request for the current time is made to a current time-providing server, and the current time is updated based on the current time provided by the current time-providing server according to the request.

To achieve the above objects, according to the present invention, there is provided a method for setting the time in a mobile communication terminal of a GSM scheme, comprising: a first step of allowing a control unit to determine whether the current time is set, at an early stage that the mobile communication terminal is powered on, and then to determine whether to set or update the current time depending on whether the current time is not set, an updating command of the current time is inputted or a predetermined time period has elapsed after the current time has been set; a second step of allowing the control unit to generate a current time request data if the current time needs to be set or updated in the first step, transmit the generated current time request data to a current time-providing server, and then wait for reception of the current time data from the current time-providing server according to the transmitted current time request data; and a third step of, if the current time data is received in the second step, allowing the control unit to set the current time based on the received current time data and then to display the set current time on a display unit.

The setting of the current time in the third step includes calculating a correction time by dividing the time taken for receiving the current time data after the current time request data has been transmitted by 2, adding the calculated correction time to the received current time data to correct the current time, and then setting the corrected current time as the current time.

### BRIEF DESCRIPTION OF THE DRAWINGS

Further objects and advantages of the invention can be more fully understood from the following detailed description taken in conjunction with the accompanying drawings in which:

FIG. 1 is a block diagram illustrating the construction of a mobile communication terminal for GSM to which a method for setting the time according to the present invention is applied; and

FIG. 2 is a flowchart illustrating a method for setting the time according to the present invention.

### DETAILED DESCRIPTION OF THE PREFERRED EMBODIMENT

A method for setting the time in a mobile communication terminal of a GSM scheme according to the present invention will now be described in detail with reference to the accompanying drawings.

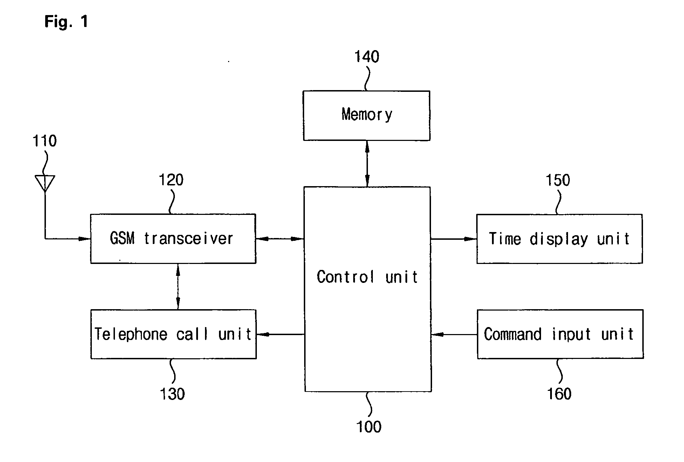

FIG. 1 is a block diagram illustrating the construction of a mobile communication terminal for GSM to which the method for setting the time according to the present invention is applied.

Referring to FIG. 1, the mobile communication terminal includes a control unit 100 for controlling telephone calls of the mobile communication terminal and the operation of setting the current time, an antenna 110, a GSM transceiver 120 for transmitting a current time request data through the antenna 110, transmitting a received current time data to the control unit 100 and transmitting and receiving a sound signal of a telephone call, under the control of the control unit 100, a telephone call unit 130 connected to the GSM transceiver 120 for performing the telephone call under the control of the control unit 100, a memory 140 for storing an operating program of the control unit 100, a time display unit 150 for displaying the current time under the control of the control unit 150, and a command input unit 160 for inputting an operating command inputted by a user to the control unit 100.

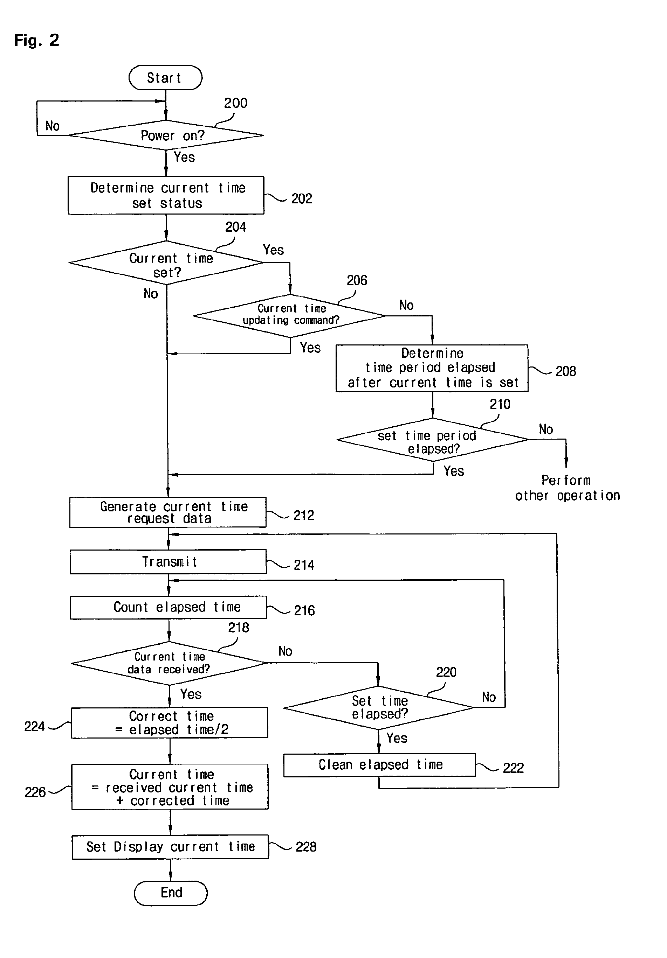

In the method for setting the time according to the present invention applied to the mobile communication terminal constructed above, as shown in FIG. 2, if a user turns on the mobile communication terminal by manipulating the command input unit 160 (step 200), the control unit 100 determines a set status of the current time (step 202). If it is determined that the current time is set in step 204, the control unit 100 determines whether an updating command of the current time is inputted through the command input unit 160 (step 206). If it is determined that the updating command of the current time is not inputted, the control unit 100 sets the current time and then determines an elapsed time (step 208). The control unit 100 determines whether the elapsed time exceeds a predetermined time (for example, 1 week or 10 days) (step 210). If the elapsed time does not exceed the predetermined time, the control unit 100 performs other operation.

Meanwhile, if it is determined that the current time is not set in step 204, the updating command of the current time is inputted in step 206 or the predetermined time period has elapsed in step 210, the control unit 100 generates a predetermined data that requests the current time, for example Short Message Service data (step 212) and transmits the generated current time request data to a current time-providing server (not shown) that provides the current time through the GSM transceiver 120 and the antenna 110 (step 214).

The current time request data sent thus is transmitted to the current time-providing server. The current time-providing server determines the current time based on the received current time request data and then transmits the determined current time to the mobile communication terminal.

Furthermore, the control unit 100 of the mobile communication terminal transmits the current time request data and then counts an elapsed time (step 216). The control unit 100 then determines whether the current time data is received from the current time-providing server through the antenna 110 and the GSM transceiver 120, as described above, (step 218).

As a result of the determination in step 218, if the current time data is not received through the antenna 110 and the GSM transceiver 120, the control unit 100 determines whether a predetermined time, for instance 1 minute has elapsed (step 220). If the predetermined set time period has not elapsed, the program returns to step 216 where the control unit 100 repeatedly performs the operation of determining whether the current time data is received through the antenna 110 and the GSM transceiver 120 while continuously counting the elapsed time. Meanwhile, if the current time data is not received even though the predetermined time period has elapsed in step 220, the control unit 100 clears the counted elapsed time (step 222) and then returns to step 214 where the control unit 100 resends the current time request data and then repeatedly performs the operation of determining whether the current time data is received through the antenna 110 and the GSM transceiver 120 while continuously counting the elapsed time.

Meanwhile, if it is determined that the current time data is received in step 218, the control unit 100 divides the counted elapsed time by 2 to calculate a correction time (step 224) and then adds the calculated correction time to the received current time, exactly correcting the current time (step 226).

In other words, since a predetermined time period has elapsed until the mobile communication terminal receives the current time data transmitted by the current time-providing server, there is error that the current time data is a little later than the actual current time. In the present invention, the elapsed time is counted until the current time data is received after the current time request data is transmitted so that error does not occur in the current time. The counted elapsed time is divided by 2 to calculate a correction time. The calculated correction time is added to the current time data, thus correcting the current time.

If the correction of the current time is finished in step 224 and step 226, the control unit 100 sets the corrected current time and displays it on the time display unit 150 (step 228).

According to the present invention described above, the current time is automatically correctly set in a mobile communication terminal of a GSM scheme. It can thus obviate inconvenience that a user has to set the current time manually by manipulating a command input unit.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method for setting the time in a mobile communication terminal of a GSM scheme, comprising:
a first step of allowing a control unit to determine whether the current time is set, at an early stage that the mobile communication terminal is powered on, and then to determine whether to set or update the current time depending on whether the current time is not set, an updating command of the current time is inputted or a predetermined time period has elapsed after the current time has been set;
a second step of allowing the control unit to generate a current time request data if the current time needs to be set or updated in the first step, transmit the generated current time request data to a current time-providing server, and then wait for reception of the current time data from the current time-providing server according to the transmitted current time request data; and
a third step of, if the current time data is received in the second step, allowing the control unit to set the current time based on the received current time data and then to display the set current time on a display unit.

2. The method as claimed in claim 1, wherein the setting of the current time in the third step includes calculating a correction time by dividing the time taken for receiving the current time data after the current time request data has been transmitted in the second step by 2, adding the calculated correction time to the received current time data to correct the current time, and setting the corrected current time as the current time.
